# EUROPEAN PATENT APPLICATION

(11) **EP 4 369 473 A1**
(43) Date of publication of application: **15.05.2024**
(21) Application number: 21965135.3
(22) Date of filing: 25.11.2021
(51) Int. Cl.: H01M 10/613, H01M 10/625, H01M 10/663, H01M 10/6567, B60L 53/31, B60L 53/60, B60L 53/66, B60L 58/26

(54) **HEAT EXCHANGE DEVICE, CHARGING STATION, HEAT EXCHANGE CONTROL METHOD, AND VEHICLE**

(71) Applicant: Huawei Digital Power Technologies Co., Ltd., Shenzhen, Guangdong 518043 (CN)
(72) Inventor: YANG, Shaobo, Shenzhen, Guangdong 518043 (CN); CHEN, Jun, Shenzhen, Guangdong 518043 (CN)
(74) Representative: Maiwald GmbH
(86) International application number: PCT/CN2021/133219
(87) International publication number: WO 2023/092400

(57) **Abstract**

This application discloses a heat exchange apparatus, a charging pile, a heat exchange control method, and a vehicle, and relates to the field of electric vehicles, to reduce a thermal runaway risk of a battery pack in an electric vehicle. The heat exchange apparatus includes a controller, at least one internal cooling source, and a first heat exchanger. The first heat exchanger is configured to cool a battery pack. The first heat exchanger includes an external cavity and at least one internal cavity. The external cavity and the internal cavity are not interconnected with each other. The at least one internal cavity is interconnected with the at least one internal cooling source to flow an internal coolant. The external cavity is configured to interconnect with an external cooling source outside the heat exchange apparatus to flow an external coolant. The controller is configured to obtain a temperature of the battery pack, and control, based on the temperature of the battery pack, a power supply to charge the battery pack and control the at least one internal cooling source and the external cooling source to run.

## Description

### TECHNICAL FIELD

This application relates to the field of electric vehicles, and in particular, to a heat exchange apparatus, a charging pile, a heat exchange control method, and a vehicle.

### BACKGROUND

At present, a battery pack in an electric vehicle mainly relies on a built-in heat exchange apparatus of the electric vehicle for cooling and heat dissipation. The battery pack being fast charged in the electric vehicle may generate a large amount of heat, especially when being fast charged at an ultra-high power. A heat exchange apparatus of a conventional battery can barely meet a temperature control requirement of a battery pack. If the heat exchange apparatus cannot effectively cool the battery pack, the battery pack may have a thermal runaway risk, such as spontaneous combustion and explosion.

### SUMMARY

Embodiments of this application provide a heat exchange apparatus, a charging pile, a heat exchange control method, and a vehicle, to reduce a thermal runaway risk of a battery pack in an electric vehicle.

To achieve the foregoing objective, the following technical solutions are used in embodiments of this application.

According to a first aspect, a heat exchange apparatus is provided, including a controller, at least one internal cooling source, and a first heat exchanger. The first heat exchanger is configured to cool a battery pack. The first heat exchanger includes an external cavity and at least one internal cavity. The external cavity and the internal cavity are not interconnected with each other. The at least one internal cavity is interconnected with the at least one internal cooling source to flow an internal coolant. The external cavity is configured to interconnect with an external cooling source outside the heat exchange apparatus to flow an external coolant. The controller is configured to obtain a temperature of the battery pack, and control, based on the temperature of the battery pack, a power supply to charge the battery pack and control the at least one internal cooling source and the external cooling source to run.

The heat exchange apparatus provided in this embodiment of this application includes the at least one internal cooling source and the heat exchanger that is in contact with the battery pack. The heat exchanger includes the external cavity and the at least one internal cavity that are not interconnected with each other. The at least one internal cavity is interconnected with the at least one internal cooling source to flow the internal coolant. The external cavity is configured to interconnect with the external cooling source outside the heat exchange apparatus to flow the external coolant. The external cooling source is used to help the internal cooling source cool the battery pack, thereby reducing a thermal runaway risk of the battery pack.

In a possible implementation, the at least one internal cooling source includes at least one of a water cooling source, an air conditioner, and a first water pump. The water cooling source is an apparatus that uses a coolant to perform heat exchange with the outside through heat convection, and the air conditioner is an apparatus that uses a compressor to enable the coolant to produce liquid-gas changes to implement heat exchange. A type and a quantity of internal cooling sources are not limited in this application.

In a possible implementation, the at least one internal cavity includes a first cavity. The at least one internal cooling source includes the water cooling source, the air conditioner, and a second heat exchanger. The water cooling source and the air conditioner each are interconnected with the second heat exchanger by using pipes. The water cooling source is further interconnected with the first cavity. The first cavity transfers one part of heat generated by the battery pack to the second heat exchanger. The second heat exchanger transfers the heat to the air conditioner The first cavity transfers the other part of the heat generated by the battery pack to the water cooling source.

In a possible implementation, the at least one internal cavity includes a first cavity. The at least one internal cooling source includes the water cooling source, the air conditioner, and a second heat exchanger. The water cooling source, the air conditioner, and the first cavity each are interconnected with the second heat exchanger by using pipes. The first cavity transfers heat generated by the battery pack to the second heat exchanger. The second heat exchanger transfers the heat to the water cooling source and the air conditioner.

In a possible implementation, the at least one internal cavity includes a first cavity and a second cavity. The at least one internal cooling source includes the water cooling source and the air conditioner. The air conditioner is interconnected with the first cavity. The water cooling source is interconnected with the second cavity. The first cavity transfers heat generated by the battery pack to the air conditioner The second cavity transfers the heat generated by the battery pack to the water cooling source.

In a possible implementation, the at least one internal cavity further includes a third cavity, and the first water pump is interconnected with the third cavity. The first water pump is configured to drive the coolant to flow in the first heat exchanger to implement temperature equalization of the battery pack.

In a possible implementation, the first heat exchanger includes a first plate-shaped structure that is in contact with the battery pack. The at least one internal cavity and the external cavity are located in the first plate-shaped structure. The at least one internal cavity and the external cavity may be distributed at spacings, to evenly cool the battery pack. The at least one internal cavity and the external cavity are of a honeycomb structure, which may further increase a heat exchange area while ensuring strength of the first plate-shaped structure.

In a possible implementation, the first heat exchanger includes a first plate-shaped structure and a second plate-shaped structure that are in contact with the battery pack. The at least one internal cavity is located in the first plate-shaped structure. The external cavity is located in the second plate-shaped structure. Because the at least one internal cavity and the external cavity do not need to be distributed at spacings, structure design is simpler. The at least one internal cavity and the external cavity may be of a honeycomb structure, which may further increase a heat exchange area while ensuring strength of the first plate-shaped structure and the second plate-shaped structure.

In a possible implementation, the at least one internal cavity is configured to accommodate the battery pack. Because the battery pack is directly immersed in the internal coolant of the at least one internal cavity, a heat conduction effect of the internal coolant is better than that of air. Therefore, better heat dissipation may be implemented.

In a possible implementation, the controller is specifically configured to: when a highest temperature of the battery pack is greater than or equal to a first threshold, control the power supply to stop charging the battery pack and control the at least one internal cooling source and the external cooling source to run; or when the highest temperature of the battery pack is greater than or equal to a second threshold and less than the first threshold, control the power supply to charge the battery pack and control the at least one internal cooling source and the external cooling source to run; or when the highest temperature of the battery pack is less than the second threshold, control the power supply to charge the battery pack, control the at least one internal cooling source to stop running, and control the external cooling source to run. In other words, the battery pack is cooled preferentially by using the external cooling source, to reduce load of the at least one internal cooling source.

In a possible implementation, the controller is specifically configured to: when a highest temperature of the battery pack is greater than or equal to a first threshold, control the power supply to stop charging the battery pack, control the at least one internal cooling source and the external cooling source to run, and obtain a heat generation amount of the battery pack; or when the heat generation amount of the battery pack is greater than a cooling capacity of the external cooling source, control the at least one internal cooling source and the external cooling source to run; or when the heat generation amount of the battery pack is less than or equal to the cooling capacity of the external cooling source, control the at least one internal cooling source to stop running and control the external cooling source to run. In other words, the battery pack is cooled preferentially by using the external cooling source, to reduce load of the at least one internal cooling source.

According to a second aspect, a heat exchange control method is provided, and applied to the heat exchange apparatus according to the first aspect and any implementation of the first aspect. The method includes: obtaining a temperature of a battery pack, and controlling a power supply to charge the battery pack and controlling, based on the temperature of the battery pack, at least one internal cooling source in the heat exchange apparatus and an external cooling source outside the heat exchange apparatus to run.

In a possible implementation, the controlling a power supply to charge the battery pack and controlling, based on the temperature of the battery pack, at least one internal cooling source in the heat exchange apparatus and an external cooling source outside the heat exchange apparatus to run includes: when a highest temperature of the battery pack is greater than or equal to a first threshold, controlling the power supply to stop charging the battery pack and controlling the at least one internal cooling source and the external cooling source to run; or when the highest temperature of the battery pack is greater than or equal to a second threshold and less than the first threshold, controlling the power supply to charge the battery pack and controlling the at least one internal cooling source and the external cooling source to run; or when the highest temperature of the battery pack is less than the second threshold, controlling the power supply to charge the battery pack, controlling the at least one internal cooling source to stop running, and controlling the external cooling source to run.

In a possible implementation, the controlling a power supply to charge the battery pack and controlling, based on the temperature of the battery pack, at least one internal cooling source in the heat exchange apparatus and an external cooling source outside the heat exchange apparatus to run includes: when a highest temperature of the battery pack is greater than or equal to a first threshold, controlling the power supply to stop charging the battery pack, controlling the at least one internal cooling source and the external cooling source to run, and obtaining a heat generation amount of the battery pack; or when the heat generation amount of the battery pack is greater than a cooling capacity of the external cooling source, controlling the at least one internal cooling source and the external cooling source to run; or when the heat generation amount of the battery pack is less than or equal to the cooling capacity of the external cooling source, controlling the at least one internal cooling source to stop running and controlling the external cooling source to run.

According to a third aspect, a charging pile is provided, including a controller, a power supply, an external cooling source, a power supply interface, a communication interface, and a heat exchange interface. The controller is configured to: receive a control command from a vehicle through the communication interface; control, according to the control command, the power supply to charge a battery pack of the vehicle through the power supply interface; and control, according to the control command, the external cooling source to exchange a coolant with the vehicle through the heat exchange interface. The coolant is used to cool the battery pack.

According to the charging pile provided in this embodiment of this application, the external cooling source is used to help cool the battery pack, thereby reducing a thermal runaway risk of the battery pack.

In a possible implementation, the controller is further configured to send a cooling capacity of the external cooling source to the vehicle through the communication interface. This helps the vehicle to determine whether the external cooling source is required to run and whether the external cooling source is required to run under full load.

In a possible implementation, the heat exchange interface and at least one of the power supply interface and the communication interface are located in different connectors. This prevents the coolant flowing out of the heat exchange interface from contacting the power supply interface or communication interface, thereby ensuring safety of a charging process.

According to a fourth aspect, a heat exchange control method is provided, and applied to the charging pile according to the third aspect and any implementation of the third aspect. The method includes: receiving a control command from a vehicle through a communication interface; and controlling, according to the control command, a power supply to charge a battery pack of the vehicle through a power supply interface, and controlling, according to the control command, an external cooling source to exchange a coolant with the vehicle through a heat exchange interface. The coolant is used to cool the battery pack.

In a possible implementation, the method further includes: sending a cooling capacity of the external cooling source to the vehicle.

According to a fifth aspect, a vehicle is provided, including the heat exchange apparatus according to the first aspect and any implementation of the first aspect, and a battery pack. A first heat exchanger in the heat exchange apparatus is in contact with the battery pack.

According to a sixth aspect, a computer-readable storage medium is provided. The computer-readable storage medium stores instructions. When the instructions are executed on a controller, the controller is enabled to perform the method according to the second aspect and any implementation of the second aspect, or perform the method according to the fourth aspect and any implementation of the fourth aspect.

According to a seventh aspect, a computer program product including instructions is provided. When the instructions are executed on a controller, the controller is enabled to perform the method according to the second aspect and any implementation of the second aspect, or perform the method according to the fourth aspect and any implementation of the fourth aspect.

For technical effects of the second aspect, the fifth aspect, and any implementation of the second aspect and the fifth aspect, refer to technical effects of the first aspect and any implementation of the first aspect. For technical effects of the fourth aspect, refer to technical effects of the third aspect and any implementation of the third aspect. For technical effects of the sixth aspect and any implementation of the sixth aspect and technical effects of the seventh aspect and any implementation of the seventh aspect, refer to technical effect of the first aspect and any implementation of the first aspect, or refer to technical effects of the third aspect and any implementation of the third aspect. Details are not described herein again.

### BRIEF DESCRIPTION OF DRAWINGS

FIG. 1 is a schematic diagram of a structure of a heat exchange system according to an embodiment of this application;
FIG. 2 is a schematic diagram of a structure of a heat exchange apparatus according to an embodiment of this application;
FIG. 3 is a schematic diagram of a structure of a first heat exchanger according to an embodiment of this application;
FIG. 4 is a schematic diagram of a structure of another first heat exchanger according to an embodiment of this application;
FIG. 5 is a schematic diagram of a structure of still another first heat exchanger according to an embodiment of this application;
FIG. 6 is a schematic diagram of a structure of at least one internal cooling source according to an embodiment of this application;
FIG. 7 is a schematic diagram of a structure of another at least one internal cooling source according to an embodiment of this application;
FIG. 8 is a schematic diagram of a connection pipeline of at least one internal cooling source according to an embodiment of this application;
FIG. 9 is a schematic diagram of another connection pipeline of at least one internal cooling source according to an embodiment of this application;
FIG. 10 is a schematic diagram of a structure of another at least one internal cooling source according to an embodiment of this application;
FIG. 11 is a schematic diagram of a structure of still another at least one internal cooling source according to an embodiment of this application;
FIG. 12 is a schematic flowchart of a heat exchange control method according to an embodiment of this application; and
FIG. 13 is a schematic flowchart of another heat exchange control method according to an embodiment of this application.

### DESCRIPTION OF EMBODIMENTS

It should be noted that the terms "first", "second", and the like in embodiments of this application are only intended for distinguishing between features of a same type, and cannot be understood as being used to indicate relative importance, a quantity, a sequence, or the like.

In embodiments of this application, the word "example", "for example", or the like is used to represent giving an example, an illustration, or a description. Any embodiment or design scheme described as an "example" or "for example" in this application should not be construed as being preferred or having more advantages than another embodiment or design scheme. To be precise, the word such as "example" or "for example" is intended to present a related concept in a specific manner.

The terms "coupling" and "connection" in embodiments of this application should be understood in a broad sense. For example, the "connection" may be a physical direct connection, or may be an indirect connection implemented by using an electronic component, such as a connection implemented by using a resistor, an inductor, a capacitor, or another electronic component.

As described above, a conventional electric vehicle being fast charged may generate a large amount of heat, especially when being fast charged at an ultra-high power. A heat exchange apparatus of a conventional battery can barely meet a temperature control requirement of a battery pack. If the heat exchange apparatus cannot effectively cool the battery pack, the battery pack may have a thermal runaway risk, such as spontaneous combustion and explosion. To implement ultra-high-power fast charging, a manufacturer designs a heat exchange apparatus of a battery pack to have ultra-high heat dissipation performance. However, during normal driving of the electric vehicle, the heat generation amount of the battery pack is very small, which leads to redundant design of the heat exchange apparatus and increases a production cost. In addition, in a strict working condition, the heat exchange apparatus of the conventional battery pack mainly relies on an air conditioner to cool the battery pack, which increases noise of the air conditioner and reduces a cooling effect of a passenger compartment. Moreover, the heat exchange apparatus of the conventional battery pack has a limited heat dissipation capability in the strict working condition, and the battery pack is easy to gather heat. To ensure safety, a charging power is reduced, resulting in an excessively long charging time and affecting driving experience.

Therefore, according to a heat exchange apparatus, a charging pile, a heat exchange control method, and a vehicle provided in embodiments of this application, when a battery pack is being charged, a cooling source in an external charging pile is used to help cool the battery pack in an electric vehicle, thereby reducing a thermal runaway risk of the battery pack in the electric vehicle. On the premise of ensuring a cooling effect of the battery pack, a design specification of the heat exchange apparatus in the electric vehicle is lowered, a production cost is reduced, and a heat dissipation requirement of future fast charging is met. In addition, because the cooling source in the charging pile is mainly used to cool the battery pack, noise of the air conditioner in the electric vehicle may be reduced, and impact on the cooling effect of the air conditioner during charging is reduced. Moreover, because the cooling effect of the cooling source in the charging pile is better than that of the heat exchange apparatus installed in the vehicle, a charging power is not reduced, thereby shortening a charging time and improving driving experience.

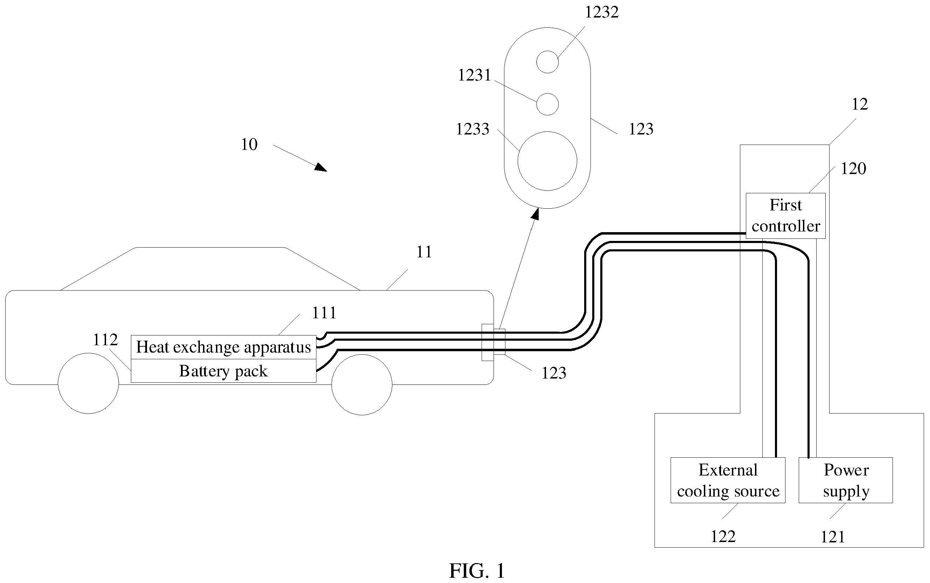

As shown in FIG. 1, an embodiment of this application provides a heat exchange system 10, including a vehicle 11 and a charging pile 12. The vehicle 11 includes a battery pack 112 and a heat exchange apparatus 111 that is in contact with the battery pack 112. The charging pile 12 includes a first controller 120, a power supply 121, an external cooling source 122, and at least one connector 123. The external cooling source 122 may be a water cooling source, an air conditioner, or the like.

The charging pile 12 may be connected to the vehicle 11 by using the at least one connector 123. The at least one connector 123 includes a power supply interface 1231, a communication interface 1232, and a heat exchange interface 1233. The heat exchange interface 1233 and at least one of the power supply interface 1231 and the communication interface 1232 may be located in a same connector 123 or located in different connectors 123. When the heat exchange interface 1233 and at least one of the power supply interface 1231 and the communication interface 1232 are located in the different connectors 123, a coolant flowing out of the heat exchange interface 1233 may be prevented from contacting the power supply interface 1231 or the communication interface 1232, thereby ensuring safety of a charging process. The first controller 120 in the charging pile 12 is connected to each of the power supply 121 and the external cooling source 122, and the first controller 120 is further connected to the heat exchange apparatus 111 through the communication interface 1232. The power supply 121 in the charging pile 12 is connected to the battery pack 112 through the power supply interface 1231. The external cooling source 122 in the charging pile 12 is connected to the heat exchange apparatus 111 in the vehicle 11 through the heat exchange interface 1233.

The first controller 120 may perform a heat exchange control method in this embodiment of this application. The method includes: receiving a control command from the heat exchange apparatus 111 in the vehicle 11 through the communication interface 1232; controlling, according to the control command, the power supply 121 to supply power to the vehicle 11 through the power supply interface 1231, to charge the battery pack 112 in the vehicle 11; and controlling, according to the control command, the external cooling source 122 to exchange the coolant with the heat exchange apparatus 111 in the vehicle 11 through the heat exchange interface 1233, to cool the battery pack 112 when the battery pack 112 is being charged.

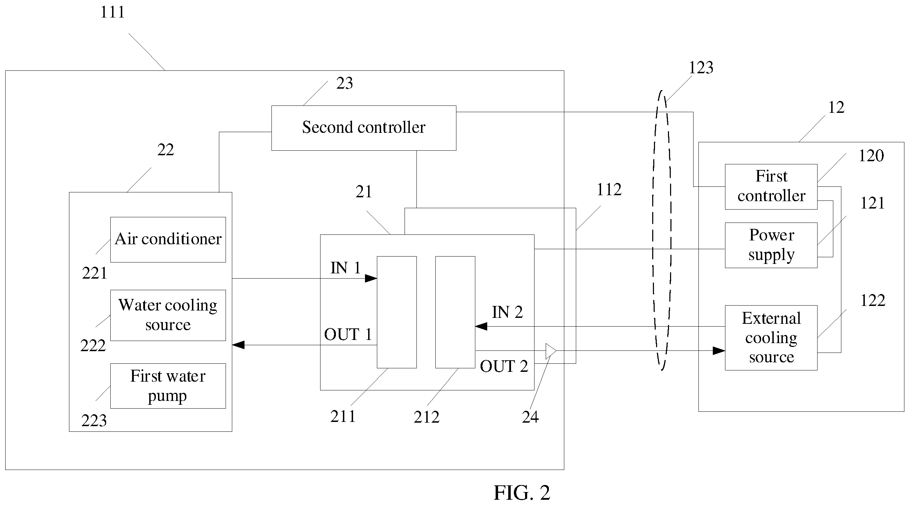

As shown in FIG. 2, the heat exchange apparatus 111 includes a second controller 23, at least one internal cooling source 22, and a first heat exchanger 21 that is in contact with the battery pack 112.

The at least one internal cooling source 22 may include at least one of an air conditioner 221, a water cooling source 222, and a first water pump 223. The water cooling source 222 is an apparatus that uses the coolant to perform heat exchange with the outside through heat convection (absorption of heat at a high temperature and release of heat at a low temperature), and is applied to a scenario in which a temperature of the battery pack 112 is higher than an ambient temperature. The air conditioner 221 is an apparatus that uses a compressor to enable the coolant to produce liquid-gas changes to implement heat exchange (absorption of heat at a low temperature and release of heat at a high temperature), and is not only applied to a scenario in which the temperature of the battery pack 112 is higher than the ambient temperature, but also applied to a scenario in which the ambient temperature is higher than the temperature of the battery pack 112. The first water pump 223 is configured to drive the coolant to flow in the first heat exchanger 21 to implement temperature equalization of the battery pack 112.

The first heat exchanger 21 includes at least one group of internal interfaces (for example, a first inlet IN 1 and a first outlet OUT 1), an external interface (for example, a second inlet IN 2 and a second outlet OUT 2), and an external cavity 212 and at least one internal cavity 211 that are not interconnected with each other. To be specific, the at least one internal cavity 211 is not interconnected with each other, and the external cavity 212 is not interconnected with the at least one internal cavity 211. That is, each cavity is independent of each other. It should be noted that interfaces (including an inlet and an outlet) in this application are non-directional. That is, the inlet may be used as an outlet, and the outlet may be used as an inlet.

The at least one internal cavity 211 is interconnected with the at least one internal cooling source 22 through the at least one group of internal interfaces to flow an internal coolant. To be specific, the at least one internal cooling source 22 performs heat exchange with the at least one internal cavity 211 of the first heat exchanger 21 by using the flowing internal coolant, to cool the battery pack 112. The external cavity 212 is interconnected with the external cooling source 122 (located in the charging pile 12) outside the heat exchange apparatus 111 through the external interface and a one-way valve 24 to flow an external coolant. To be specific, the external cooling source 122 performs heat exchange with the external cavity 212 by using the flowing external coolant, to cool the battery pack 112. The one-way valve 24 is configured to adjust a flow rate of the external coolant, and is not shown in other accompanying drawings for simplifying the accompanying drawings. The external cavity 212 and the at least one internal cavity 211 are not interconnected with each other. Therefore, internal coolants are physically isolated from each other, the internal coolant and the external coolant are physically isolated from each other, and each coolant does not contaminate each other.

The second controller 23 may perform the heat exchange control method in this embodiment of this application. The method includes: communicating with the first controller 120 (for example, sending a control command to the first controller 120), controlling, by using the first controller 120, the power supply 121 to charge the battery pack 112, controlling the at least one internal cooling source 22 to run, and controlling, by using the first controller 120, the external cooling source 122 to run, so as to cool the battery pack 112.

For example, the following describes several possible structures of the first heat exchanger 21.

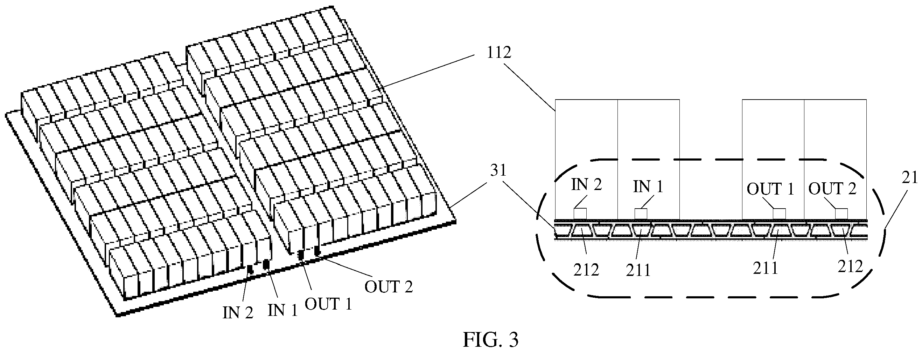

For example, FIG. 3 shows a structure of a first heat exchanger 21. The first heat exchanger 21 includes a first plate-shaped structure 31 that is in contact with the battery pack 112. The at least one group of internal interfaces (for example, the first inlet IN 1 and the first outlet OUT 1) and the external interface (for example, the second inlet IN 2 and the second outlet OUT 2) are disposed on the first plate-shaped structure 31. The at least one internal cavity 211 and the external cavity 212 are located in the first plate-shaped structure 31, and the at least one internal cavity 211 and the external cavity 212 may be distributed at spacings, to evenly cool the battery pack 112. The at least one internal cavity 211 and the external cavity 212 shown in FIG. 3 may be of a honeycomb structure, which may further increase a heat exchange area while ensuring strength of the first plate-shaped structure 31.

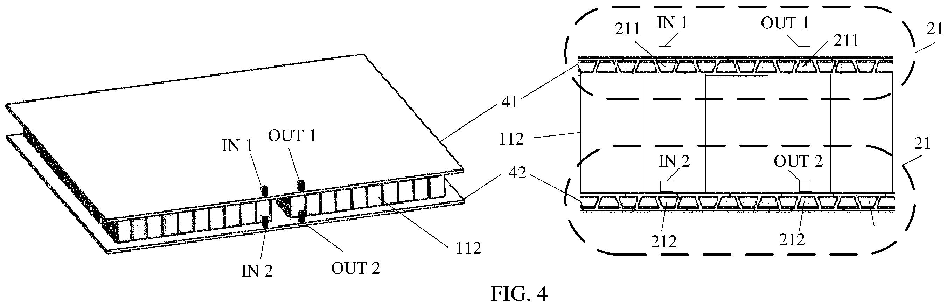

For example, FIG. 4 shows a structure of another first heat exchanger 21. The first heat exchanger 21 includes a first plate-shaped structure 41 and a second plate-shaped structure 42 that are in contact with the battery pack 112. The at least one internal cavity 211 is located in the first plate-shaped structure 41. The at least one group of internal interfaces (for example, the first inlet IN 1 and the first outlet OUT 1) is disposed on the first plate-shaped structure 41. The external cavity 212 is located in the second plate-shaped structure 42. The external interface (for example, the second inlet IN 2 and the second outlet OUT 2) is disposed on the second plate-shaped structure 42. The at least one internal cavity 211 and the external cavity 212 shown in FIG. 4 may be of a honeycomb structure, which may further increase a heat exchange area while ensuring strength of the first plate-shaped structure 31 and the second plate-shaped structure 42. Compared with the structure of the first heat exchanger 21 in FIG. 3, the structure of the first heat exchanger 21 in FIG. 4 is simpler in structure design because the at least one internal cavity 211 and the external cavity 212 do not need to be distributed at spacings.

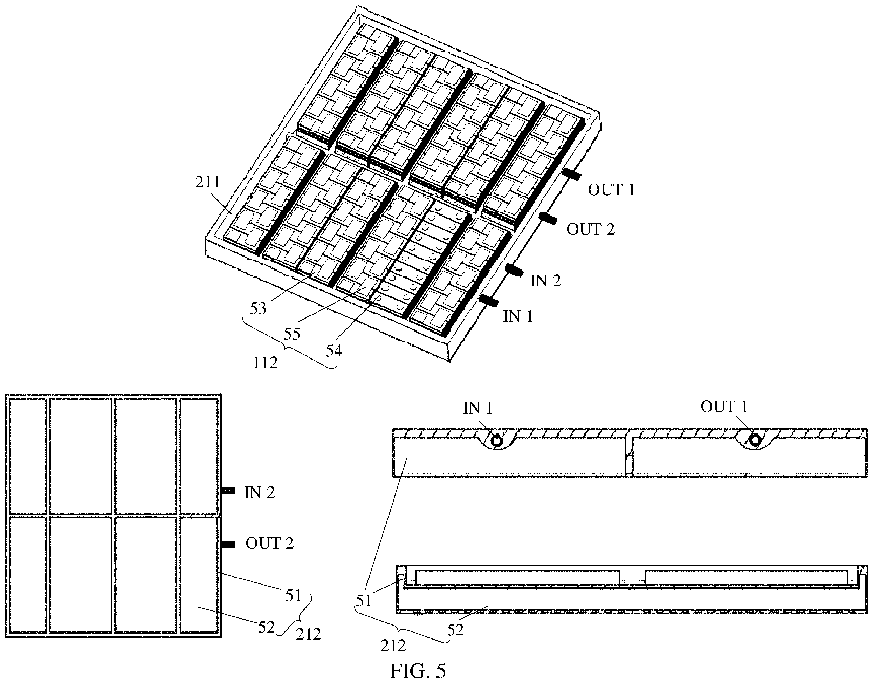

For example, FIG. 5 shows a structure of still another first heat exchanger 21. The first heat exchanger 21 is a box-shaped housing hollow structure. A housing of the first heat exchanger 21 includes a side plate 51, a bottom plate 52, and a top plate (not shown in the figure). After the side plate 51, the bottom plate 52, and the top plate are enclosed, the at least one internal cavity 211 is formed. The at least one group of internal interfaces (for example, the first inlet IN 1 and the first outlet OUT 1) is interconnected with the at least one internal cavity 211 through any side (for example, the side plate 51, the bottom plate 52, or the top plate) of the housing. The battery pack 112 (including a battery cell 53, a tab 54, and a copper plate 55) is located in the at least one internal cavity 211 and is immersed in the internal coolant. The internal coolant is an insulation liquid. At least one side (namely, at least one of the side plate 51, the bottom plate 52, and the top plate) of the housing is hollow to form the external cavity 212. The external interface (for example, the second inlet IN 2 and the second outlet OUT 2) is connected to the external cavity 212 by using the housing. Because the battery pack 112 is directly immersed in the internal coolant, a heat conduction effect of the internal coolant is better than that of air. Therefore, better heat dissipation may be implemented.

For example, the following describes several possible structures of the at least one internal cooling source 22. It should be noted that any structure of the at least one internal cooling source 22 below may be combined with any structure of the first heat exchanger 21 described above.

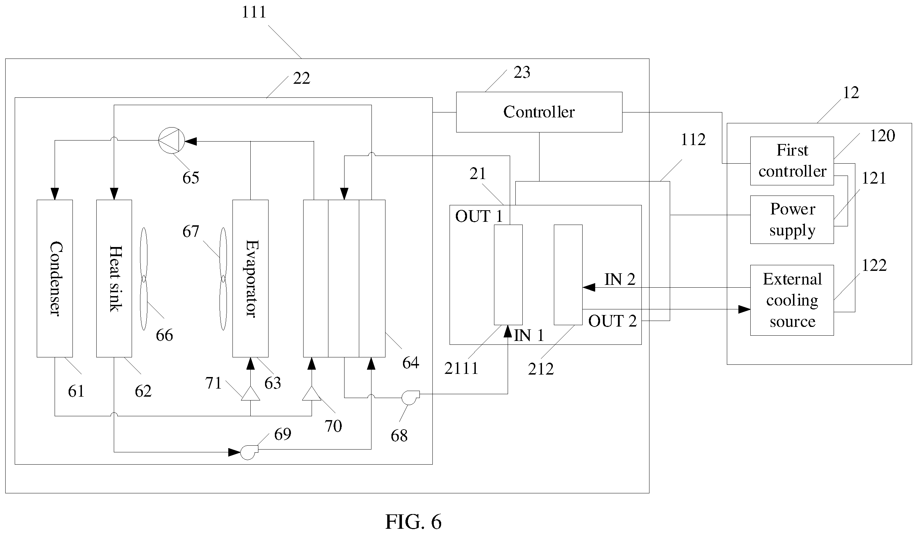

For example, FIG. 6 shows a structure of at least one internal cooling source 22, including a water cooling source, an air conditioner, a second heat exchanger 64, and a second water pump 68. The at least one internal cavity of the first heat exchanger 21 includes a first cavity 2111. The water cooling source, the air conditioner, and the first cavity 2111 each are interconnected with the second heat exchanger 64 by using pipes. The first cavity 2111 is interconnected with the second heat exchanger 64 through the at least one group of internal interfaces (for example, the first inlet IN 1 and the first outlet OUT 1). The first cavity 2111 transfers heat generated by the battery pack 112 to the second heat exchanger 64. The second heat exchanger 64 transfers the heat to the water cooling source and the air conditioner In this case, the first heat exchanger 21 may use the structure shown in FIG. 5. Structures of the at least one internal cooling source 22 and the first heat exchanger 21 may avoid mutual contamination between various coolants.

The water cooling source includes a heat sink 62, a first fan 66, and a third water pump 69. The heat sink 62 is interconnected with the second heat exchanger 64 by using the third water pump 69 to flow the coolant (for example, water), to implement heat exchange of the heat sink 62 and the second heat exchanger 64. The first fan 66 is configured to accelerate heat dissipation of the heat sink 62 through acceleration of air convection.

The air conditioner includes a condenser 61, a compressor 65, and a first expansion valve 70. Optionally, the air conditioner may further include an evaporator 63, a second expansion valve 71, and a second fan 67. The evaporator 63 and the second fan 67 are usually located in a compartment and are configured to cool the compartment. The condenser 65 is interconnected with the evaporator 63 by using the compressor 65 and the second expansion valve 71 to flow the coolant (which is a refrigerant in this case). The condenser 65 is further interconnected with the second heat exchanger 64 by using the compressor 65 and the first expansion valve 70 to flow the coolant. One part of the refrigerant absorbs heat and is gasified in the evaporator 63, and the other part of the refrigerant absorbs heat and is gasified in the second heat exchanger 64. After being compressed by the compressor 65, the gasified refrigerant is liquefied in the condenser 61 to dissipate heat, and flows back again to the evaporator 63 and the second heat exchanger 64. The second heat exchanger 64 is further interconnected with the first cavity 2111 by using the second water pump 68 to flow the coolant.

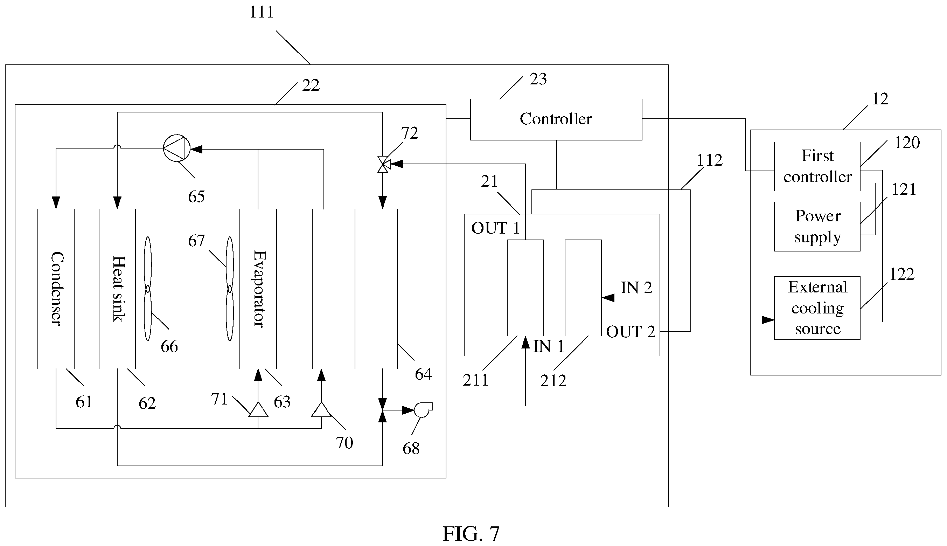

For example, FIG. 7 shows a structure of another at least one internal cooling source 22, including the water cooling source, the air conditioner, and the second heat exchanger 64. The at least one internal cavity of the first heat exchanger 21 includes the first cavity 2111. The water cooling source and the air conditioner each are interconnected with the second heat exchanger 64 by using pipes, and the water cooling source is further interconnected with the first cavity 2111. The first cavity 2111 is interconnected with the water cooling source through the at least one group of internal interfaces (for example, the first inlet IN 1 and the first outlet OUT 1). The first cavity 2111 transfers one part of heat generated by the battery pack 112 to the second heat exchanger 64. The second heat exchanger 64 transfers the heat to the air conditioner The first cavity 2111 transfers the other part of the heat generated by the battery pack 112 to the water cooling source.

The water cooling source includes the heat sink 62, the first fan 66, the second water pump 68, and a three-way valve 72. The heat sink 62 and the first cavity 2111 are interconnected with the second heat exchanger 64 by using the three-way valve 72 and the second water pump 68 to flow the coolant, to implement heat exchange of the heat sink 62, the second heat exchanger 64, and the first heat exchanger 21. The first fan 66 is configured to accelerate heat dissipation of the heat sink 62 through air convection. For descriptions of the air conditioner, refer to related descriptions in FIG. 6. Details are not described herein again.

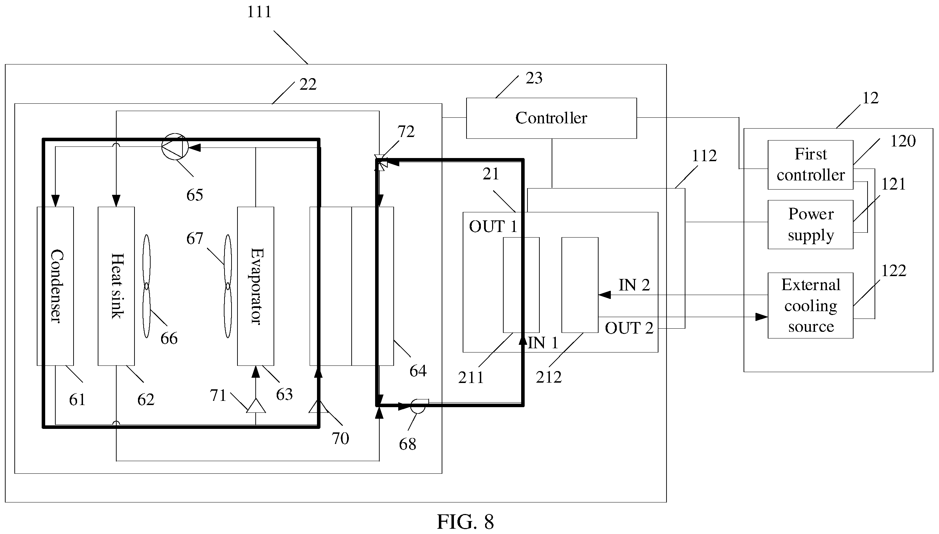

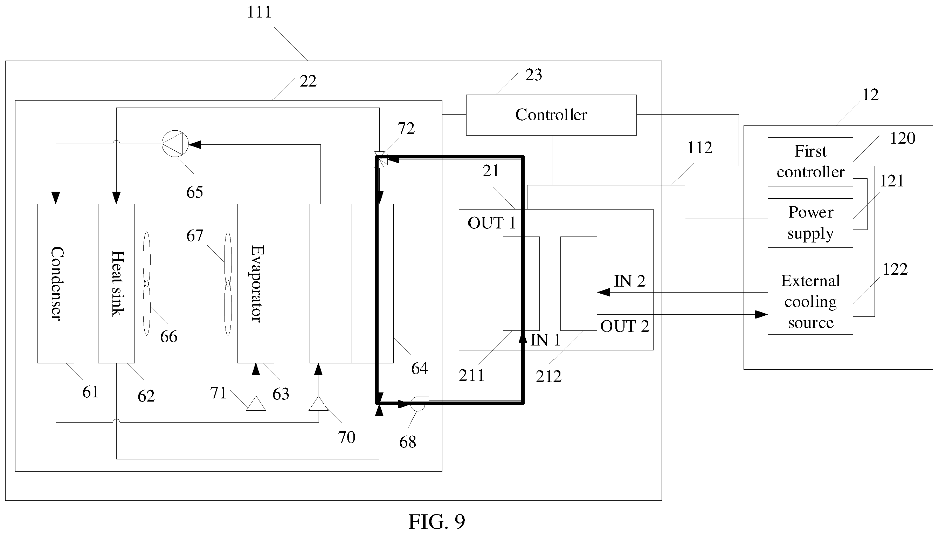

As shown in FIG. 8, if the second controller 23 controls the three-way valve 72 to connect a pipeline between the second heat exchanger 64 and the first heat exchanger 21 and controls the first expansion valve 70 to connect a pipeline between the condenser 61 and the second heat exchanger 64, two loops shown by thick solid lines in FIG. 8 may be formed. In this case, the battery pack 112 is mainly cooled by using the external cooling source 122. Therefore, load of the at least one internal cooling source 22 may be reduced. For example, air conditioner load and air conditioner noise are reduced, and comfort of a passenger compartment is improved. As shown in FIG. 9, if the second controller 23 controls the three-way valve 72 to connect the pipeline between the second heat exchanger 64 and the first heat exchanger 21 and controls the first expansion valve 70 to close the pipeline between the condenser 61 and the second heat exchanger 64, a loop shown by thick solid lines in FIG. 9 may be formed. In this case, the battery pack 112 is cooled completely by using the external cooling source 122, without affecting cooling of the passenger compartment by the air conditioner. In this way, air conditioner load and air conditioner noise are reduced, and comfort of the passenger compartment is improved.

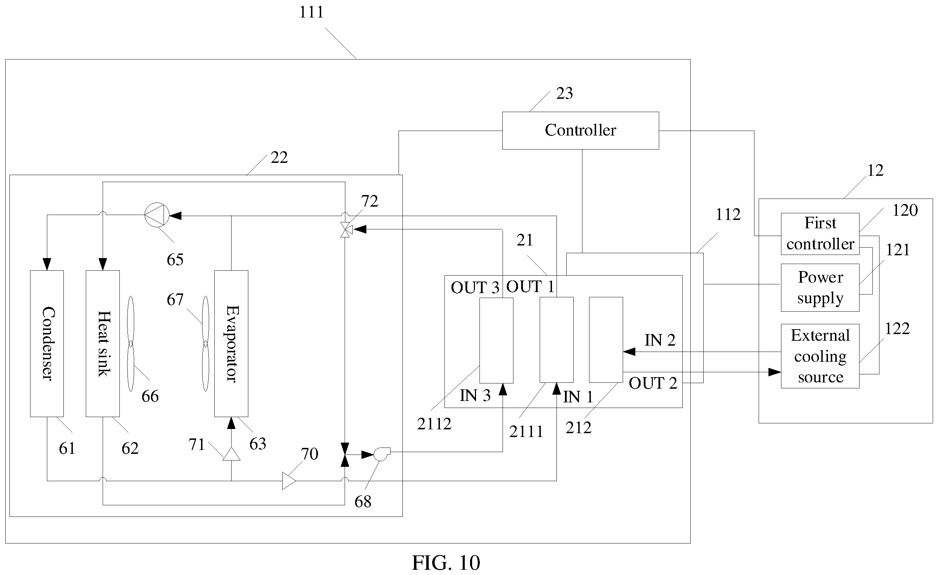

For example, FIG. 10 shows a structure of still another at least one internal cooling source 22, including the water cooling source and the air conditioner. The at least one internal cavity of the first heat exchanger 21 includes the first cavity 2111 and a second cavity 2112. The air conditioner is interconnected with the first cavity 2111 through the at least one group of internal interfaces (for example, the first inlet IN 1 and the first outlet OUT 1). The water cooling source is interconnected with the second cavity 2112 through at least one group of internal interfaces (for example, a third inlet IN 3 and a third outlet OUT 3). The first cavity 2111 transfers heat generated by the battery pack 112 to the air conditioner. The second cavity 2112 transfers the heat generated by the battery pack 112 to the water cooling source.

The water cooling source includes the heat sink 62, the first fan 66, the second water pump 68, and the three-way valve 72. The heat sink 62 and the first cavity 2111 are interconnected with the second cavity 2112 by using the three-way valve 72 and the second water pump 68 to flow the coolant, to implement heat exchange of the heat sink 62 and the first heat exchanger 21. The first fan 66 is configured to accelerate heat dissipation of the heat sink 62 through air convection.

The air conditioner includes the condenser 61, the compressor 65, and the first expansion valve 70. Optionally, the air conditioner may further include the evaporator 63, the second expansion valve 71, and the second fan 67. The evaporator 63 and the second fan 67 are usually located in the compartment and are configured to cool the compartment. The condenser 65 is interconnected with the evaporator 63 by using the compressor 65 and the second expansion valve 71 to flow the coolant (which is a refrigerant in this case). The condenser 65 is further interconnected with the first cavity 2111 by using the compressor 65 and the first expansion valve 70 to flow the coolant. One part of the refrigerant absorbs heat and is gasified in the evaporator 63, and the other part of the refrigerant absorbs heat and is gasified in the first cavity 2111. After being compressed by the compressor 65, the gasified refrigerant is liquefied in the condenser 61 to dissipate heat, and flows back again to the evaporator 63 and the first cavity 2111.

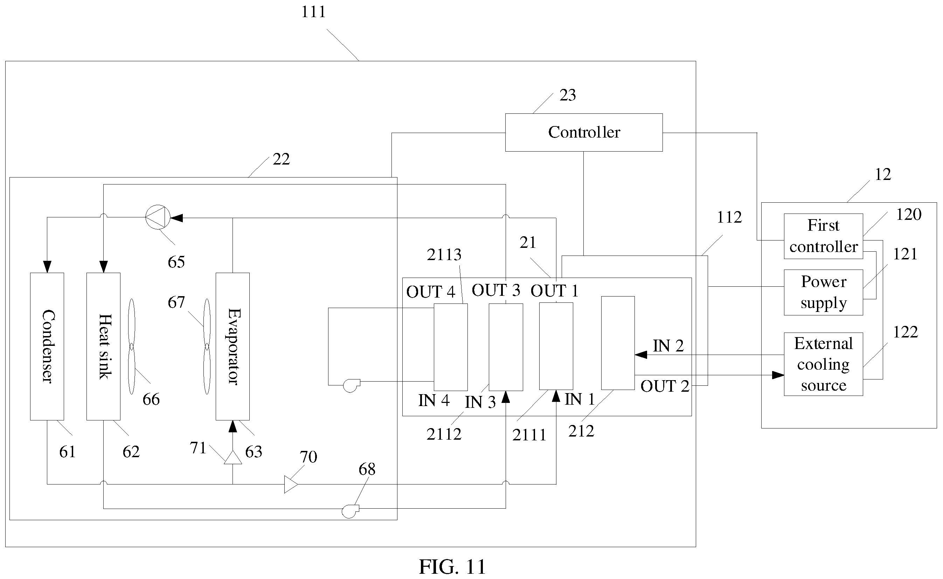

For example, FIG. 11 shows a structure of still another at least one internal cooling source 22, including the water cooling source, the air conditioner, and the first water pump 223. The at least one internal cavity of the first heat exchanger 21 includes the first cavity 2111, the second cavity 2112, and a third cavity 2113. The air conditioner is interconnected with the first cavity 2111 through the at least one group of internal interfaces (for example, the first inlet IN 1 and the first outlet OUT 1). The water cooling source is interconnected with the second cavity 2112 through the at least one group of internal interfaces (for example, the third inlet IN 3 and the third outlet OUT 3). The first water pump 223 is interconnected with the third cavity 2113 through at least one group of internal interfaces (for example, a fourth inlet IN 4 and a fourth outlet OUT 4). The first cavity 2111 transfers heat generated by the battery pack 112 to the air conditioner, the second cavity 2112 transfers the heat generated by the battery pack 112 to the water cooling source, and the first water pump 223 drives the coolant to flow in the first heat exchanger 21, to implement temperature equalization of the battery pack 112.

The water cooling source includes the heat sink 62, the first fan 66, and the second water pump 68. The heat sink 62 and the first cavity 2111 are interconnected with the second cavity 2112 by using the second water pump 68 to flow the coolant, to implement heat exchange of the heat sink 62 and the first heat exchanger 21. The first fan 66 is configured to accelerate heat dissipation of the heat sink 62 through air convection. For descriptions of the air conditioner, refer to related descriptions in FIG. 10. Details are not described herein again.

It should be noted that the first water pump 223 in FIG. 11 may also be applied to the scenarios in FIG. 6 to FIG. 10.

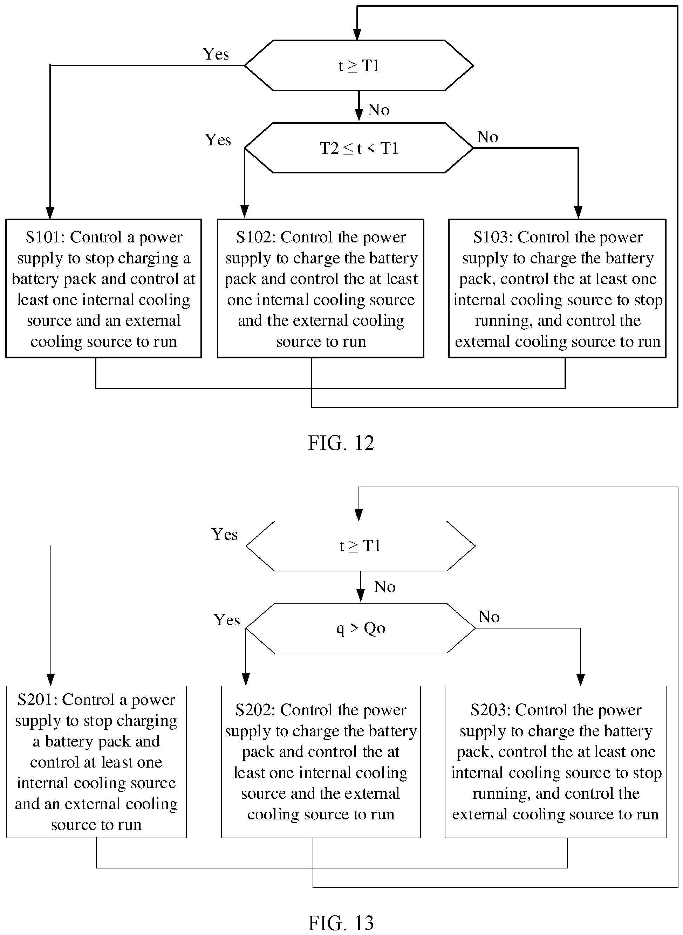

For example, the following describes how the second controller 23 controls, by using the first controller 120, the power supply 121 to charge the battery pack 112, controls the at least one internal cooling source 22 to run, and controls, by using the first controller 120, the external cooling source 122 to run, to cool the battery pack 112. As shown in FIG. 12, the second controller 23 and the first controller 120 may perform the following heat exchange control method.

S101: When a highest temperature t of the battery pack 112 is greater than or equal to a first threshold T1, the second controller 23 controls the power supply 121 to stop charging the battery pack 112 and controls the at least one internal cooling source 22 and the external cooling source 122 to run.

Temperature sensors are installed in a plurality of parts of the battery pack 112. The second controller 23 may obtain the highest temperature of the battery pack 112 in real time by using these sensors.

Before the power supply 121 fast charges the battery pack 112, if the highest temperature of the battery pack 112 is excessively high, there is a great risk of continuing to fast charge the battery pack 112. Therefore, the second controller 23 controls the at least one internal cooling source 22 to run, and sends a control command to the first controller 120 in the charging pile 12, so that the first controller 120 controls, according to the control command, the external cooling source 122 to run.

In particular, the second controller 23 may control the at least one internal cooling source 22 to run under full load, and send the control command to the first controller 120 in the charging pile 12, so that the first controller 120 controls, according to the control command, the external cooling source 122 to run under full load. That the second controller 23 controls the at least one internal cooling source 22 to run under full load includes at least one of the following: For example, the second controller 23 controls the air conditioner, the water cooling source, and the first water pump each to run, controls the air conditioner to run at a maximum power, controls the three-way valve of the water cooling source to be at maximum opening, and controls the first water pump, the second water pump, and the third water pump to be at a maximum rotational speed. Controlling the external cooling source 122 to run under full load includes: controlling the one-way valve to be at the maximum opening, controlling the external cooling source 122 to run at the maximum power, and the like, to quickly cool the battery pack 112.

S102: When the highest temperature of the battery pack 112 is greater than or equal to a second threshold T2 and less than the first threshold T1, the second controller 23 controls the power supply 121 to charge the battery pack 112 and controls the at least one internal cooling source 22 and the external cooling source 122 to run.

The second controller 23 sends the control command to the first controller 120 in the charging pile 12 and the first controller 120 controls, according to the control command, the power supply 121 to charge the battery pack 112, only when the highest temperature of the battery pack 112 decreases below the first threshold. In this case, the second controller 23 determines, based on the highest temperature of the current battery pack 112 (for example, through table query), a maximum charging power allowed at a current moment and sends the control command to the first controller 120 in the charging pile 12, so that the first controller 120 controls the charging power of the power supply 121 according to the control command.

After the battery pack 112 starts to be charged, if the highest temperature of the battery pack 112 is still high, the second controller 23 still controls the at least one internal cooling source 22 and the external cooling source 122 to run, to cool the battery pack 112.

In particular, the second controller 23 controls the at least one internal cooling source 22 and the external cooling source 122 to run under full load when the highest temperature of the battery pack 112 is greater than or equal to a third threshold T3 and less than the first threshold T 1, to quickly cool the battery pack 112. For descriptions about how the second controller 23 controls the at least one internal cooling source 22 and the external cooling source 122 to run under full load, refer to descriptions in step S101. When the highest temperature of the battery pack 112 is greater than or equal to the second threshold T2 and less than the third threshold T3, the second controller 23 controls the at least one internal cooling source 22 to run under partial load and controls the external cooling source 122 to run under full load. In this way, load of the at least one internal cooling source 22 is reduced. For example, air conditioner load and air conditioner noise are reduced, and comfort of a passenger compartment is improved.

That the second controller 23 controls the at least one internal cooling source 22 to run under partial load includes at least one of the following: For example, the second controller 23 controls at least one of the air conditioner, the water cooling source, and the first water pump not to run or to run under partial load; controls the air conditioner to run at a non-maximum power; controls the three-way valve of the water cooling source not to be at the maximum opening; and controls at least one of the first water pump, the second water pump and the third water pump not to be at the maximum rotational speed.

S103: When the highest temperature of the battery pack 112 is less than the second threshold T2, the second controller 23 controls the power supply 121 to charge the battery pack 112, controls the at least one internal cooling source 22 to stop running, and controls the external cooling source 122 to run.

In particular, when the highest temperature of the battery pack 112 is less than the second threshold T2, the second controller 23 may control the at least one internal cooling source 22 to stop running and control the external cooling source 122 to run under partial load. The second controller 23 may send the control command to the first controller 120 in the charging pile 12, and the first controller 120 controls, according to the control command, the external cooling source 122 to run under partial load. For example, the external cooling source 122 is controlled to run at the non-maximum power, the external cooling source 122 is controlled to run at an interval, and the one-way valve is controlled to be not at the maximum opening, to achieve energy saving.

In this step, load of the at least one internal cooling source 22 may be released, the at least one internal cooling source 22 may stop running to reduce noise, or the load of the at least one internal cooling source 22 may be completely used for cooling the passenger compartment, thereby improving comfort of the passenger compartment.

It should be noted that, after step S 103 is performed, operation is started again from step S101.

Alternatively, as shown in FIG. 13, the second controller 23 may perform the following heat exchange control method.

S201: When the highest temperature t of the battery pack 112 is greater than or equal to the first threshold T1, the second controller 23 controls the power supply 121 to stop charging the battery pack 112, controls the at least one internal cooling source 22 and the external cooling source 122 to run, and obtains a heat generation amount q of the battery pack 112.

The heat generation amount of the battery pack 112 varies with different charging powers. A relationship between the charging power and the heat generation amount is calibrated to obtain a table. The second controller 23 may determine the heat generation amount of the battery pack 112 at the different charging powers through table query. For other descriptions, refer to step S101.

S202: When the heat generation amount q of the battery pack 112 is greater than a cooling capacity Qo of the external cooling source 122, the second controller 23 controls the power supply 121 to charge the battery pack 112 and controls the at least one internal cooling source 22 and the external cooling source 122 to run.

During design of an electric vehicle, an operating status and a cooling capacity of the at least one internal cooling source 22 may be calibrated to obtain a table. The second controller 23 may determine cooling capacities of the at least one internal cooling source 22 in different operating statuses (for example, full load or partial load) through table query. The second controller 23 may obtain cooling capacities of the external cooling source 122 in different operating statuses through communication with the first controller 120 in the charging pile 12.

When the heat generation amount q of the battery pack 112 is greater than the cooling capacity Qo of the external cooling source 122, the second controller 23 sends the control command to the first controller 120 in the charging pile 12 and the first controller 120 controls, according to the control command, the power supply 121 to charge the battery pack 112. In this case, the second controller 23 determines, based on the highest temperature of the current battery pack 112 (for example, through table query), a maximum charging power allowed at a current moment and sends the control command to the first controller 120 in the charging pile 12, so that the first controller 120 controls the charging power of the power supply 121 according to the control command.

In particular, when the heat generation amount q of the battery pack 112 is greater than or equal to a sum (Qi + Qo) of the cooling capacity Qi of the at least one internal cooling source 22 and the cooling capacity Qo of the external cooling source 122, the second controller 23 may control the at least one internal cooling source 22 and the external cooling source 122 to run under full load. When the heat generation amount q of the battery pack 112 is greater than the cooling capacity Qo of the external cooling source 122 and is less than the sum (Qi + Qo) of the cooling capacity Qi of the at least one internal cooling source 22 and the cooling capacity Qo of the external cooling source 122, the second controller 23 may control the at least one internal cooling source 22 to run under partial load and control the external cooling source 122 to run under full load.

That is, the battery pack 112 is cooled preferentially by using the external cooling source 122, to reduce load of the at least one internal cooling source 22. For other descriptions, refer to step S102.

S203: When the heat generation amount q of the battery pack 112 is less than or equal to the cooling capacity Qo of the external cooling source 122, control the at least one internal cooling source 22 to stop running and control the external cooling source 122 to run.

In particular, when the heat generation amount q of the battery pack 112 is less than the cooling capacity Qo of the external cooling source 122, the second controller 23 may control the at least one internal cooling source 22 to stop running and control the external cooling source 122 to run under partial load. For this step, refer to step S 103.

According to the heat exchange apparatus, the charging pile, the heat exchange control method, and the vehicle provided in embodiments of this application, the heat exchange apparatus includes the at least one internal cooling source and the heat exchanger that is in contact with the battery pack. The heat exchanger includes the external cavity and the at least one internal cavity that are not interconnected with each other. The at least one internal cavity is interconnected with the at least one internal cooling source to flow the internal coolant. The external cavity is configured to interconnect with the external cooling source outside the heat exchange apparatus to flow the external coolant. The external cooling source is used to help the internal cooling source cool the battery pack, thereby reducing a thermal runaway risk of the battery pack.

An embodiment of this application further provides a computer-readable storage medium. The computer-readable storage medium stores instructions. When the instructions are executed on a controller, the controller is enabled to perform the method in FIG. 12 or FIG. 13.

An embodiment of this application further provides a computer program product including instructions. When the instructions are executed on a controller, the controller is enabled to perform the method in FIG. 12 or FIG. 13.

It should be understood that, in embodiments of this application, sequence numbers of the foregoing processes do not mean execution sequences. The execution sequences of the processes should be determined according to functions and internal logic of the processes, and should not be construed as any limitation on the implementation processes of the embodiments of this application.

A person of ordinary skill in the art may be aware that the example modules, algorithms, and steps described with reference to embodiments disclosed in this specification can be implemented by electronic hardware or a combination of computer software and electronic hardware. Whether the functions are performed by hardware or software depends on particular applications and design constraints of the technical solutions. A skilled person may use different methods for each particular application to implement the described functions, but this implementation should not be considered as beyond the scope of this application.

It may be clearly understood by a person skilled in the art that for the purpose of convenient and brief description, for a detailed working process of the system, apparatus, and module described above, refer to the corresponding process in the foregoing method embodiments. Details are not described herein.

In several embodiments provided in this application, it should be understood that the disclosed system, device, and method may be implemented in other manners. For example, the device embodiments described above are only an example. For example, the module division is only logical function division and may be other division in actual implementation. For example, a plurality of modules or components may be combined or integrated in another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, that is, may be located in one device, or may be distributed to a plurality of devices. Some or all the modules may be selected based on an actual requirement to achieve the objectives of the solutions of the embodiments.

In addition, function modules in embodiments of this application may be integrated into one device, or each of the modules may exist alone physically, or two or more modules are integrated into one device.

All or some of the foregoing embodiments may be implemented by software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, or a digital subscriber line (Digital Subscriber Line, DSL)) manner or a wireless (such as infrared, wireless, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Disk, SSD)), or the like.

The foregoing descriptions are only specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A heat exchange apparatus, comprising:
a controller, at least one internal cooling source, and a first heat exchanger, wherein the first heat exchanger is configured to cool a battery pack;
the first heat exchanger comprises an external cavity and at least one internal cavity, wherein the external cavity and the at least one internal cavity internal cavity are not interconnected with each other, the at least one internal cavity is interconnected with the at least one internal cooling source to flow an internal coolant, and the external cavity is configured to interconnect with an external cooling source outside the heat exchange apparatus to flow an external coolant; and
the controller is configured to obtain a temperature of the battery pack, and control a power supply to charge the battery pack and control, based on the temperature of the battery pack, the at least one internal cooling source and the external cooling source to run.

2. The heat exchange apparatus according to claim 1, wherein the at least one internal cooling source comprises at least one of a water cooling source, an air conditioner, and a first water pump, wherein the water cooling source is an apparatus that uses a coolant to perform heat exchange with the outside through heat convection, and the air conditioner is an apparatus that uses a compressor to enable the coolant to produce liquid-gas changes to implement heat exchange.

3. The heat exchange apparatus according to claim 2, wherein the at least one internal cavity comprises a first cavity, the at least one internal cooling source comprises the water cooling source, the air conditioner, and a second heat exchanger, the water cooling source and the air conditioner each are interconnected with the second heat exchanger by using pipes, and the water cooling source is further interconnected with the first cavity.

4. The heat exchange apparatus according to claim 2, wherein the at least one internal cavity comprises a first cavity, the at least one internal cooling source comprises the water cooling source, the air conditioner, and a second heat exchanger, and the water cooling source, the air conditioner, and the first cavity each are interconnected with the second heat exchanger by using pipes.

5. The heat exchange apparatus according to claim 2, wherein the at least one internal cavity comprises a first cavity and a second cavity, the at least one internal cooling source comprises the water cooling source and the air conditioner, the air conditioner is interconnected with the first cavity, and the water cooling source is interconnected with the second cavity.

6. The heat exchange apparatus according to any one of claims 3 to 5, wherein the at least one internal cavity further comprises a third cavity, and the first water pump is interconnected with the third cavity.

7. The heat exchange apparatus according to any one of claims 1 to 6, wherein the first heat exchanger comprises a first plate-shaped structure that is in contact with the battery pack, and the at least one internal cavity and the external cavity are located in the first plate-shaped structure.

8. The heat exchange apparatus according to any one of claims 1 to 6, wherein the first heat exchanger comprises a first plate-shaped structure and a second plate-shaped structure that are in contact with the battery pack, the at least one internal cavity is located in the first plate-shaped structure, and the external cavity is located in the second plate-shaped structure.

9. The heat exchange apparatus according to any one of claims 1 to 6, wherein the at least one internal cavity is configured to accommodate the battery pack.

10. The heat exchange apparatus according to any one of claims 1 to 9, wherein the controller is specifically configured to:
when a highest temperature of the battery pack is greater than or equal to a first threshold, control the power supply to stop charging the battery pack and control the at least one internal cooling source and the external cooling source to run; or
when the highest temperature of the battery pack is greater than or equal to a second threshold and less than the first threshold, control the power supply to charge the battery pack and control the at least one internal cooling source and the external cooling source to run; or
when the highest temperature of the battery pack is less than the second threshold, control the power supply to charge the battery pack, control the at least one internal cooling source to stop running, and control the external cooling source to run.

11. The heat exchange apparatus according to any one of claims 1 to 9, wherein the controller is specifically configured to:
when a highest temperature of the battery pack is greater than or equal to a first threshold, control the power supply to stop charging the battery pack, control the at least one internal cooling source and the external cooling source to run, and obtain a heat generation amount of the battery pack; or
when the heat generation amount of the battery pack is greater than a cooling capacity of the external cooling source, control the at least one internal cooling source and the external cooling source to run; or
when the heat generation amount of the battery pack is less than or equal to the cooling capacity of the external cooling source, control the at least one internal cooling source to stop running and control the external cooling source to run.

12. A heat exchange control method, applied to the heat exchange apparatus according to any one of claims 1 to 11, wherein the method comprises:
obtaining a temperature of a battery pack, and controlling a power supply to charge the battery pack and controlling, based on the temperature of the battery pack, at least one internal cooling source in the heat exchange apparatus and an external cooling source outside the heat exchange apparatus to run.

13. The method according to claim 12, wherein the controlling a power supply to charge the battery pack and controlling, based on the temperature of the battery pack, at least one internal cooling source in the heat exchange apparatus and an external cooling source outside the heat exchange apparatus to run comprises:
when a highest temperature of the battery pack is greater than or equal to a first threshold, controlling the power supply to stop charging the battery pack and controlling the at least one internal cooling source and the external cooling source to run; or
when the highest temperature of the battery pack is greater than or equal to a second threshold and less than the first threshold, controlling the power supply to charge the battery pack and controlling the at least one internal cooling source and the external cooling source to run; or
when the highest temperature of the battery pack is less than the second threshold, controlling the power supply to charge the battery pack, controlling the at least one internal cooling source to stop running, and controlling the external cooling source to run.

14. The method according to claim 12, wherein the controlling a power supply to charge the battery pack and controlling, based on the temperature of the battery pack, at least one internal cooling source in the heat exchange apparatus and an external cooling source outside the heat exchange apparatus to run comprises:
when a highest temperature of the battery pack is greater than or equal to a first threshold, controlling the power supply to stop charging the battery pack, controlling the at least one internal cooling source and the external cooling source to run, and obtaining a heat generation amount of the battery pack; or
when the heat generation amount of the battery pack is greater than a cooling capacity of the external cooling source, controlling the at least one internal cooling source and the external cooling source to run; or
when the heat generation amount of the battery pack is less than or equal to the cooling capacity of the external cooling source, controlling the at least one internal cooling source to stop running and controlling the external cooling source to run.

15. A charging pile, comprising a controller, a power supply, an external cooling source, a power supply interface, a communication interface, and a heat exchange interface, wherein
the controller is configured to: receive a control command from a vehicle through the communication interface; control, according to the control command, the power supply to charge a battery pack of the vehicle through the power supply interface; and control, according to the control command, the external cooling source to exchange a coolant with the vehicle through the heat exchange interface, wherein the coolant is used to cool the battery pack.

16. The charging pile according to claim 15, wherein the controller is further configured to send a cooling capacity of the external cooling source to the vehicle through the communication interface.

17. The charging pile according to claim 15 or 16, wherein the heat exchange interface and at least one of the power supply interface and the communication interface are located in different connectors.

18. A heat exchange control method, comprising:
receiving a control command from a vehicle through a communication interface; and
controlling, according to the control command, a power supply to charge a battery pack of the vehicle through a power supply interface, and controlling, according to the control command, an external cooling source to exchange a coolant with the vehicle through a heat exchange interface, wherein the coolant is used to cool the battery pack.

19. The method according to claim 18, further comprising:
sending a cooling capacity of the external cooling source to the vehicle.

20. A vehicle, comprising the heat exchange apparatus according to any one of claims 1 to 11, and a battery pack, wherein a first heat exchanger in the heat exchange apparatus is in contact with the battery pack.

21. A computer-readable storage medium, wherein the computer-readable storage medium stores instructions, and when the instructions are executed on a controller, the controller is enabled to perform the method according to any one of claims 12 to 14, or perform the heat exchange control method according to claim 18 or 19.
